# EUROPEAN PATENT SPECIFICATION

(11) **EP 2 022 178 B1**
(45) Date of publication and mention of the grant of the patent: **04.07.2012**
(21) Application number: 06793196.4
(22) Date of filing: 04.09.2006
(51) Int. Cl.: H04B 5/00, G06K 17/00, G06K 19/077

(54) **DATA COMMUNICATION IN AN ELECTRONIC DEVICE**
DATENKOMMUNIKATION IN EINEM ELEKTRONISCHEN GERÄT
COMMUNICATION DE DONNEES DANS UN DISPOSITIF ELECTRONIQUE

(30) Priority: 14.03.2006 US 767246 P; 30.05.2006 US 420813
(43) Date of publication of application: 11.02.2009
(73) Proprietor: SONY ERICSSON MOBILE COMMUNICATIONS AB, 221 88 Lund (SE)
(72) Inventor: AHLGREN, Erik, SE-242 31 Hörby (SE); ÅBERG, Kristoffer, S-LUND 224 68 (SE); LESSING, Simon, S-246 57 Barsebäck (SE)
(74) Representative: Aurell, Henrik
(86) International application number: PCT/EP2006/065978
(87) International publication number: WO 2007/104365

(56) References cited:
- EP-A- 1 575 184
- WO-A-97/46964
- US-B1- 6 173 899
- PATENT ABSTRACTS OF JAPAN & JP 2001 076102 A (TOKIN CORP.), 23 March 2001 (2001-03-23)
- PATENT ABSTRACTS OF JAPAN & JP 2005 293444 A (RENESAS TECH CORP), 20 October 2005 (2005-10-20)

## Description

### Field of the invention

The present invention relates to electronic devices, and means for data communication and management using electronic devices. More particularly, the invention relates to a solution for accessing data using a data carrier, which is cost-efficient and intuitive. According to the invention, the commonly accepted means for providing data or storage capability to an electronic device by inserting a data carrier, is modified by combining the data carrier with a tag for short-range radio frequency communication.

### Background

Digital mobile telephony has become one of the most important ways of communicating, both for making voice calls and exchanging data. For the mere purpose of exchanging data, network protocols have also evolved for use by means of computers, e.g. in Wireless Local Area Networks (WLAN).

A system for short range radio communication between electronic devices has also been provided under the name Bluetooth™. Bluetooth is basically a wireless personal area network technology, which is an open standard for short-range transmission of digital voice and data between predominantly mobile devices, and supports point-to-point and multipoint applications. Bluetooth typically provides up to 720 Kbps data transfer within a range of 10 meters and up to 100 meters with a power boost. Bluetooth uses omni-directional radio waves that can transmit through walls and other non-metal barriers in the unlicensed 2.4GHz band.

In recent years, a new technology for even shorter range communication in the mobile telecommunications market has evolved, generally referred to as Near Field Communication (NFC). NFC has been characterized as the intuitive link between consumer devices, and facilitates short-range communication between electronic devices, such as mobile phones, Personal Digital Assistants (PDA), computers and advanced consumer electronics, via a fast and easy wireless connection. The NFC technology has been developed jointly by Royal Philips Electronics and Sony Corporation, and enables consumers to securely exchange and store all kinds of information including ownership rights, credit card numbers, coupons, membership messages, pictures and MP3 files, simply by bringing two devices close together. NFC may act as a secure smart key for access to content and services such as cashless payment, ticketing, online entertainment and access control, and can also be used to automatically configure and initiate wireless connections under other protocols, such as Bluetooth or Wi-Fi, enabling devices to communicate at longer ranges or transfer data at higher rates.

Typically, NFC provides a contactless proximity interaction over a few centimeters which simplifies the issue of identification, as there is less confusion when devices can only connect with their immediate neighbors. A number of NFC trials are currently taking place around the globe. Since December 2005, a major NFC trial has been underway at the Philips Arena stadium in Atlanta, Georgia, allowing sports fans to easily buy goods at concession stands and apparel stores. Additionally they are able to access and download mobile content such as ring tones, wallpapers, screensavers and clips from favorite players and artists by holding their NFC-enabled phone in front of a poster embedded with an NFC tag.

NFC runs on the 13.56 MHz frequency band with a read and write range of up to 10 centimeters. It operates at data rates of 106 kbits/s and 212 kbits/s, although higher transmission speeds can be achieved between dedicated NFC devices, initially up to 424 kbits/s with potential for higher bit rates. As NFC devices can operate in an active or passive mode, the technology also offers a unique link to the contactless smart card world as it is compatible with the broadly established contactless smart card infrastructure based on ISO 14443 A (i.e. Philips MIFARE® technology), as well as Sony's FeliCa™ card used for electronic ticketing in public transport and for payment applications. It also allows mobile devices to communicate in passive mode, saving power and extending battery life. Targeted to become a widely adapted contactless infrastructure, NFC is already standardized according to globally accepted standardization bodies, such as ISO (18092), ECMA (340) and ETSI.

State of the art document WO 97/46964 discloses an example of a device utilising a proximity interaction. WO 97/46964 discloses a smart card reader for reading security access cards, and in particular, smart cards. The reader includes a first circuit (50) for reading a proximity type smart card disposed adjacent to or inserted into the slot, and a second circuit for reading a contact type smart card inserted into the slot. The aim of the solution according to WO 97/46964 is to provide a card terminal that is able to read contact, contact-less,' or a combination card.

State of the art document JP 2005 293444 also discloses a non contact data exchange between a card and a terminal.

### Summary of the invention

Many electronic devices of today are capable of exchanging data with other devices in several different ways. A mobile phone, for instance, is typically configured to communicate with a radio communications network such as a WCDMA network, for voice calls and for downloading or streaming data from content servers. A Bluetooth chip is often also included, enabling short range communication. NFC technology provides yet another means for communication using the same electronic device. Even though the different communication technologies are intended to supplement each other, it may be difficult for the average user with limited technical skills to appropriately handle an electronic device.

It is therefore an object of the invention to provide a simple and intuitive solution for handling data in electronic devices, in terms of communicating, storing, and accessing data. Based on this object, the invention also stems from the inventors' realization that, while wireless transmission of data continues to increase, local attachable memories for connection to electronic devices are still used, and provide benefits that cannot always be achieved by wireless communication with remote storage facilities.

According to a first aspect of the invention, the stated object is thereby fulfilled by means of an electronic device, comprising:
a Near Field Communication (NFC) interface, including an antenna for sensing an electromagnetic wave, and a circuit for acquiring data modulated in an electromagnetic wave;
a data carrier interface, including a slot for receiving a data carrier; wherein the antenna is positioned adjacent to the data carrier slot, such that the NFC interface is operable to acquire data stored on an NFC tag positioned in the slot and
a control unit connected to the NFC interface, operable to access a memory based on the data acquired from the NFC tag.

In one embodiment, the antenna and the data carrier slot are substantially parallel to each other, and at least partly overlap.

In one embodiment, the NFC interface comprises:
an electromagnetic wave generator for forming a radio frequency field, connected to the antenna;
a demodulator connected to the antenna for acquiring data modulated in an electromagnetic wave.

In one embodiment, the NFC interface comprises:
a modulator for sending data by modulating electromagnetic waves.

In one embodiment, the antenna comprises a closed loop coil.

In one embodiment, the electronic device comprises:
a signal transceiver connectable to a data memory through a communications network;
and the control unit connected to the NFC interface, is operable to send data to the data memory responsive to a store command, by using a data memory access code acquired by the NFC interface.

In one embodiment, the data stored on the NFC tag comprises a communication address of a network unit in a communications network, and the electronic device further comprises:
a signal transceiver connectable to the communications network;
and the control unit connected to the NFC interface, is operable to connect to the network unit by using the communication address acquired by the NFC interface.

In one embodiment,
the control unit connected to the NFC interface, is configured to identify data acquired by the NFC interface as a communication address; and the electronic device further comprises:
a signal transceiver configured to access the communication address through a communications network, responsive to the identification of the acquired data as an communication address.

In one embodiment, the signal transceiver is configured to receive Digital Rights Management (DRM) rights for a data object, responsive to accessing the communication address.

In one embodiment, the signal transceiver is configured to connect to a content server for receiving streaming data under approval defined by the received DRM rights.

In one embodiment, the electronic device comprises:
a radio signal transceiver connectable to communicate by radio with a radio communications network.

In one embodiment, the electronic device comprises:
a local memory for storing data which is accessible by means of a data access code; wherein the control unit connected to the NFC interface, is configured to identify data acquired by the NFC interface as a data access code; and
a data access unit connected to the control unit, operable to access data in the local memory by using the data access code.

In one embodiment, the NFC interface is configured to operate in the 13.56 MHz frequency band.

In one embodiment, the data carrier interface includes galvanic contacts for communicative access to a memory on a data carrier.

In one embodiment, the data carrier interface is a memory stick interface and the data carrier slot is a memory stick slot.

According to a second aspect, the object of the invention is fulfilled by means of a system for data communication, comprising:
an electronic device as described above;
an NFC tag attached to the support member;
wherein the antenna is positioned adjacent to the data carrier slot, such that the NFC interface is operable to acquire data stored on the NFC tag when the data carrier is positioned in the slot.

In one embodiment, the support member has outer physical dimensions corresponding to the slot.

In one embodiment, the antenna and the data carrier slot are substantially parallel to each other, and at least partly overlap.

In one embodiment, the antenna comprises a closed loop coil.

In one embodiment, the NFC tag comprises a microchip connected to a tag antenna.

In one embodiment, the NFC interface comprises:
an electromagnetic wave generator for forming a radio frequency field, connected to the antenna;
a demodulator connected to the antenna for acquiring data modulated in an electromagnetic wave;
and wherein the microchip of the NFC tag is configured to be powered up by a short-range electromagnetic wave signal emitted through the antenna, and to respond by emitting an electromagnetic wave signal modulated to incorporate the data stored on the NFC tag.

In one embodiment, the data carrier interface includes galvanic contacts for communicative access to a memory on the data carrier.

In one embodiment, the data carrier interface includes
a sensor connected to the galvanic contacts;
wherein the data carrier includes
poles for connection to the galvanic contacts when the data carrier is inserted in the slot; and
a circuit connected to the poles;
and wherein the sensor is configured to identify an inserted data carrier as an NFC tag carrier by connection to the circuit.

In one embodiment, the sensor is configured to identify the inserted data carrier by means of detecting an impedance level between two poles.

In one embodiment, the NFC interface is configured to operate in the 13.56 MHz frequency band.

In one embodiment, the data carrier interface is a memory stick interface and the data carrier slot is a memory stick slot.

According to a third aspect, the object is fulfilled by means of a method for data communication in an electronic device, comprising the steps of:
- providing an electronic device including a data carrier interface with a slot for receiving a data carrier, and a Near Field Communication (NFC) interface with an antenna for sensing an electromagnetic wave connected to a circuit for acquiring data modulated in an electromagnetic wave, which antenna is positioned adjacent to the data carrier slot;
- inserting a data carrier into the data carrier slot, which data carrier includes a support member having outer physical dimensions corresponding to the slot and an NFC tag attached to the support member;
- acquiring data stored on the NFC tag by means of the NFC interface and
- accessing a memory by a control unit (18) of the electronic device using the acquired data.

In one embodiment, the NFC interface operates in the 13.56 MHz frequency band.

In one embodiment, the data carrier interface includes galvanic contacts for communicative access to a memory on a data carrier.

In one embodiment, the data carrier interface is a memory stick interface and the data carrier slot is a memory stick slot.

In one embodiment, the antenna and the data carrier slot are substantially parallel to each other, and at least partly overlap.

In one embodiment, the antenna comprises a closed loop coil.

In one embodiment, the step of acquiring data comprises the steps of:
- generating an electromagnetic wave and emitting a short-range electromagnetic wave signal by means of the antenna;
- receiving the emitted signal in the NFC tag by means of a tag antenna connected to microchip, wherein the circuit is powered up and caused to
- emit an electromagnetic wave signal modulated to incorporate the data stored on the NFC tag; and
- demodulating the modulated signal in the NFC interface to retrieve the data.

According to a fourth aspect, the object of the invention is fulfilled by means of a data carrier, comprising:
- a support structure having outer dimensions shaped to fit in a slot of a data carrier interface of an electronic device; and
- an NFC tag attached to the support structure, wherein the NFC tag comprises data arranged to be retrieved and used by a control unit of an electronic device to access a memory.

In one embodiment, the support structure has outer dimensions corresponding to an IC media carrier.

In one embodiment, the support structure has outer dimensions corresponding to Memory Stick media carrier.

In one embodiment, the NFC tag comprises a microchip connected to a radio frequency tag antenna.

### Brief description of the drawings

The features and advantages of the present invention will be more apparent from the following description of preferred embodiments with reference to the accompanying drawings, on which
Fig. 1 schematically illustrates an elevated view of an electronic device in the form of a mobile phone, which is devised with an interface for an insertable data carrier;
Figs 2 and 3 schematically illustrate a side view and a front view, respectively, of the electronic device of Fig. 1, illustrating the presence of NFC interface adjacent to the data carrier interface; and
Fig. 4 schematically illustrates an electronic device by means of a block diagram, showing functional elements of an embodiment of the invention.

### Detailed description of preferred embodiments

The present invention relates to handling of data in electronic devices, for the purpose of storing data, accessing data or communicating data. The electronic device as such may take the shape of e.g. a personal computer, a digital camera, a media player, or a PDA. However, as a best mode of the invention presently known, the invention will mainly be described herein as incorporated in the field of telecommunications, and the electronic device will therefore occasionally be referred to as a mobile phone. It should be noted, though, that the borders between what can be considered a mobile phone, a portable laptop computer, a PDA, becomes less and less clear since many electronic devices include corresponding functions, even though focus is on different functionalities in the different categories of electronic devices. Furthermore, it should be emphasized that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawings.

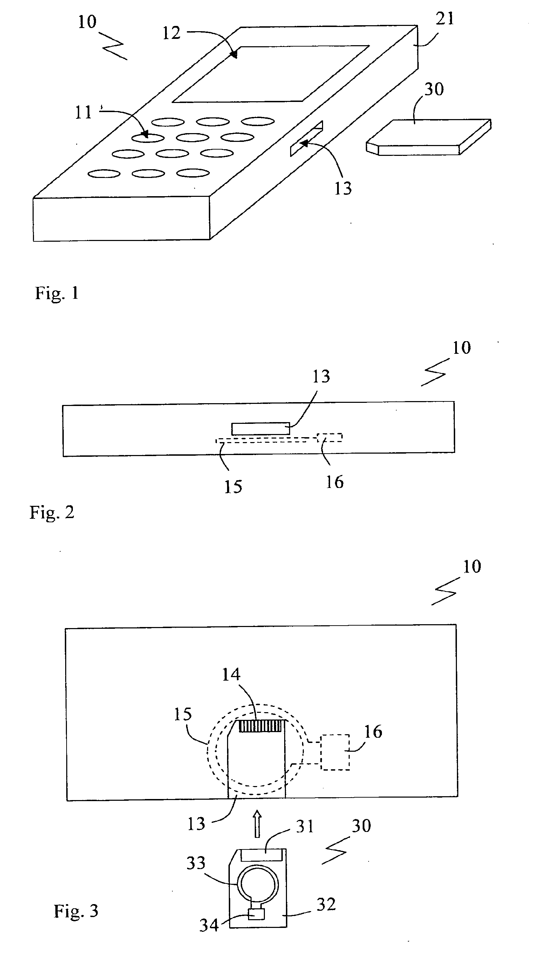

Fig. 1 schematically illustrates an electronic device 10 in the form of a mobile phone. Details of the mobile phone 10 as such are of little importance to the invention, but for the sake of clarity it should be mentioned that phone 10 comprises a support structure 21 including a chassis and a cover, directly or indirectly supporting the other components of the terminal. Phone 10 is further devised with a user input interface comprising a keypad 11 and preferably also a microphone (not shown). The user input interface may also comprise a touch-sensitive display in addition to or instead of keypad 11. Furthermore, a user output interface of phone 10 comprises a display 12 and preferably also a speaker (not shown). Though not shown in Fig. 1, phone 10 further comprises a signal transceiver, including an antenna and radio transmission and reception electronics, for communicative connection to a base station of a communications network, such as a WCDMA network. A power supply is preferably included in phone 10 in the form of a battery, and a cable socket for connection to a mains outlet via a transformer. Phone 10 is also devised with a computer system, including a microprocessor with associated memory and software, configured to carry out the tasks of signal processing and data handling in the phone. All of these features are, as such, well known in the related art.

Phone 10 further comprises a data carrier interface, including a slot 13 for receiving a data carrier 30. The data carrier interface includes a data reader/writer connected to galvanic contacts positioned in connection with slot 13, which are arranged to establish galvanic contact with an inserted data carrier. The data carrier 30 typically holds a data memory, which can be used to provide additional memory space to the electronic device. For portable devices, such as mobile phones, low cost, light weight and compact size will always be key factors, and built-in memory space will therefore be a problematic area. The possibility to insert and connect a releasable data carrier 30 is therefore beneficial. Today, data carriers for insertion and connection to electronic devices include e.g. CD ROM and DVD, and traditional magnetic type memories such as floppy discs and diskettes. Another type of data carrier media, which is used to a large extent in mobile electronic devices today, is Memory Stick. Memory Stick is silicon media, or IC (Integrated Circuit) media, that is designed for a wide range of data management, such as audio/visual applications for IT-related use in PC, PDA, digital cameras, mobile phones etc. IC recording media offer compact high capacity, allow high-speed data read/write and excel in expandability to ensure copyright protection and the addition of new functions. IC recording media are also unique in that a single media can be used to store, transfer and share all kinds of digital data, such as photos, voice, music, moving pictures and PC data. These media are particularly well suited for use with compact mobile devices, because they require no drive mechanism and are unaffected by vibration. Memory Stick is a standard for IC media which provides combined features of manageable shape, robust structure, low consumption power for use with portable products, and others. A standard memory stick carrier has a flat elongated shape with dimensions 50x21.5x2.8 mm. A smaller version called Memory Stick Duo applies the same concept, but is further optimized to be used with smaller products such as mobile phones, portable music terminals, wrist-type information terminals, and others. The Memory Stick Duo has the same specifications except its size, which is 31x20.1x1.6 mm, and can be used in the same manner as a Memory Stick using Memory Stick Duo adapter. data carrier 30 in Fig. 1 is illustrated to have the shape and size of a memory stick duo carrier. On the verge of market introduction is also the Memory Stick Micro format, an ultrasmall IC recording media designed to meet the growing storage needs of highly compact, multifunctional mobile phones. Memory Stick Micro media is approximately one-quarter the size of Memory Stick Duo media, yet only about 1.2 mm thick.

Memory Stick is just one group of data carriers, which are collectively referred to under their trademark MemoryStick™. Other types of data carriers are available on the market, though, and reference will be made to the terms "data carrier" or "memory card" below, of which Memory Stick is one example.

In Fig. 2 mobile phone 10 is shown from the side at which the data carrier slot 13 is formed, and in Fig. 3 a cross-sectional view from the front side of mobile phone 10 through slot 13 is shown. Fig. 3 in particular illustrates that slot 13 has a size which is at least as large as the outer dimensions of data carrier 30, and slot 13 preferably corresponds to the shape of carrier 30 to securely retain an inserted carrier 30 such that contact is obtained between contacts 31 on carrier 30 and galvanic contacts 14 provided in slot 13. An inserted data carrier may be retained by means of a lid or a biased shoulder portion, or simply by squeezing in the carrier into a resilient clamping member, none of which are explicitly shown in the drawings.

In accordance with the invention, the electronic device here provided in the shape of mobile phone 10 further comprises a contact-free near field communication interface, using electromagnetic waves. The embodiments described herein make use of the Near Field Communication (NFC) technology referred to above. The NFC technology is as such standardized and described in the related literature, and will therefore not be described in detail herein, as it lies within the field of knowledge of the skilled person. However, it may be mentioned that the published European patent application EP 1 431 904 A2 describes both the function and structure of an NFC apparatus, including how an NFC apparatus is configured to read data from another NFC apparatus, which may be an NFC tag, by transmitting an electromagnetic wave signal using an antenna, and by detecting a modulated electromagnetic wave signal received in response from the NFC tag. In order to carry out near field communication, the NFC interface of phone 10 therefore comprises an antenna 15 devised for transmission and reception of electromagnetic waves, connected to a circuit 16, which includes circuitry for acquiring data included by modulation in a received electromagnetic wave. Circuit 16 preferably comprises an electromagnetic wave generator for forming a radio frequency field, connected to the antenna, and a demodulator connected to the antenna for acquiring data modulated in an electromagnetic wave. The circuit 16 may also comprise a modulator connected to the antenna 15, for sending data by modulating electromagnetic waves. The specific structure and function of the NFC interface circuitry is not crucial to the present invention, but the NFC interface may e.g. be configured in accordance with the previously mentioned MIFARE or FeliCa technologies. Antenna 15 is preferably a closed loop coil, as illustrated. Furthermore, antenna 15 is disposed adjacent to slot 13, so as to at least partly overlap slot 13. NFC is a communication technology for very short distances, and proximity between communicating devices is therefore important. By arranging the antenna 15 adjacent to slot 13, an NFC tag placed in slot 13 will be positioned in close proximity to the antenna 15, preferably not more than 1 cm and even more preferably less than 3 mm from the antenna. Antenna 15 and slot 13 are preferably parallel to each other apart from being arranged to overlap, such that an NFC tag placed in the slot 13 is suitably positioned for safe communication between the NFC interface and the NFC tag.

In one embodiment, the NFC interface may be usable also to interact with external NFC devices placed in proximity to antenna 15, such as below phone 10 when oriented as shown in Fig. 2. Alternatively, another NFC antenna may be employed for data communication with external NFC devices.

Any NFC tag small enough to fit into slot 13 may of course be inserted to be placed in communicative connection with the NFC interface. However, in a preferred embodiment the NFC tag is attached to a support structure having outer dimensions corresponding to the dimensions of slot 13. In Fig. 3, an embodiment is shown in which a data carrier 30 comprises a support structure 32 having the shape of a memory card, e.g. a Memory Stick. An NFC tag, comprising a tag antenna 33 and a microchip 34 connected to the antenna, is attached to support structure 32. As previously described, the NFC tag has no built in power source. Instead, circuit 34 is configured to be powered up by an electromagnetic wave signal received by means of tag antenna 33, upon which a modulated wave is generated and transmitted by means of tag antenna 33. The modulation of the transmitted wave represents the data carried by the NFC tag. Presently, NFC tags are predominantly used for storing simple ID codes or web links, but the capability to store more sophisticated data is believed to develop in the near future.

Data carrier 30 may be a carrier devised to interact with galvanic contacts 14 for exchange of data, such as a memory card, and thereby include a high capacity memory. Presently memory cards are offered with several GB of memory space, a number that continuously grows. However, in one embodiment data carrier 30 is merely a dummy carrier, acting as a support structure to the NFC tag. Support structure 32 is then typically a simple piece of plastic, cut or molded to have the outer dimensions of a memory card. The NFC tag, including antenna 33 and microchip 34, may be attached to support structure 32 by gluing or welding, or be molded into support structure 32. In any case, the data carrier devised in accordance with this embodiment will look like a standard data carrier for use with the electronic device in question, e.g. like a Memory Stick, and it will also be used like the data carrier it resembles since it is inserted in the dedicated slot 13. This provides the ease of use sought for by the market, in a time where different types of data communication not only provides extended capabilities but also requires a higher degree of knowledge from the users.

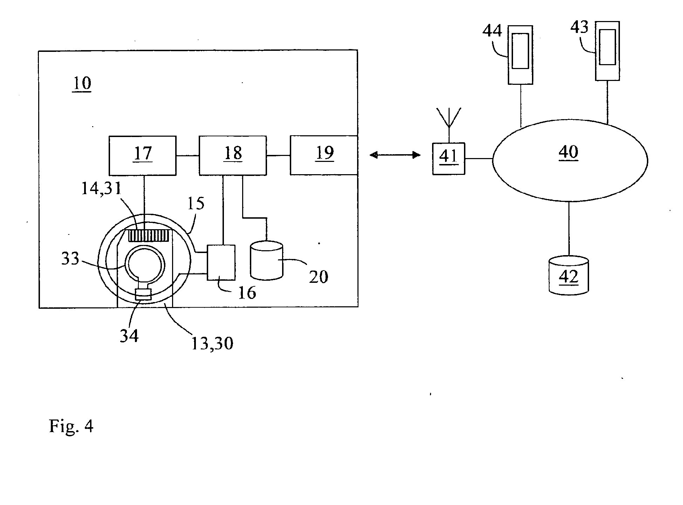

Some different embodiment of the invention, which highlight the advantages obtained, will now be described with reference to the block diagram of Fig. 4.

Fig. 4 schematically illustrates an electronic device 10 comprising a data carrier interface, comprising a slot 13 in which a data carrier 30 has been inserted, as also illustrated in Fig. 3. Galvanic contacts 14 are positioned in slot 13 for connection to an inserted data carrier, where said carrier comprises a data memory and contacts for connection to galvanic contacts 14. The galvanic contacts 14 are connected to a data reader/writer unit 17, configured read data from such a memory on the data carrier. As an alternative to galvanic contacts, an optical read and write interface may be employed in the slot, such as a CD reader and burner, but this alternative will not be outlined in any further detail. A control unit 18 typically comprises a microprocessor with associated memory and computer program code, and serves to handle data management within the electronic device. It should of course be noted that the elements depicted in Fig. 4 are separated in terms of functionality, but need not represent physically separate elements. For instance, many of the tasks carried out in an electronic device are performed by means computer processes. In certain embodiments, as outlined below, control unit 18 is also connected to a signal transceiver 19, e.g. including an antenna for wireless communication with a base station 41 in a radio network 40, or an internet connection. Besides the data carrier interface, electronic device 10 comprises an NFC interface as already explained, and Fig. 4 illustrates antenna 15 and its associated circuit 16. Control unit 18 is connected to circuit 16, for subsequent handling or use of data acquired by means of the NFC interface. Furthermore, a local memory 20 may be connected to control unit 18, where data can be stored and accessed.

Fig. 4 illustrates the scenario of a data carrier provided with an NFC tag being inserted into slot 13. From the drawing, it is also clear that antenna 15 overlaps tag antenna 33, such that these antennas are suitable positioned to carry out data communication with each other according to the NFC technology.

In one embodiment, the data carrier 30 acts as a virtual data storage device. In a more specific embodiment usable for understanding this aspect, data carrier 30 has the dimensions of a memory card, but does not include the type of data IC memory normally included in a memory card. Instead, carrier 30 is only a plastic card carrying an NFC tag. The data stored in the NFC tag comprises a communication address which can be accessed by means of signal transceiver 19 of electronic device 10. When the data carrier 30, which forms a virtual memory card, is inserted in slot 13 the NFC interface automatically acquires the communication address from the NFC tag, and initiates a communication connection to that address by means of signal transceiver 19. In a preferred embodiment, program files may be stored on the virtual memory card just as if it were a real memory card, and it is also possible to open files from the virtual memory card is if were they physically stored there. As an example, a user inserts a virtual memory card 30 related to images, upon which a communication address to a network-based data memory 42, such as an image file server is read by the NFC interface. The image file server is thereby accessed by means of signal transceiver 19, and the images stored therein are presented in a file management window on display 12 of device 10. Presentation of the files is executed just as if it was a real memory card. The file management program may e.g. alternatively be a media player, if the virtual memory card is related to music. An advantage of this embodiment is therefore that the user may handle the data carrier in the same manner as any other memory card, namely by insertion in the dedicated slot, and the same function as obtained by a normal memory card is also fulfilled, namely increased memory space. The difference is that the data is not physically stored on the data carrier 30, but the usage of a recognized interface is the same as with a normal memory card. Furthermore, the virtual memory card can provide access to large capacity data storage, while the cost of the carrier itself will be very low.

In one embodiment the present invention may be used for accessing data in a familiar way. Again, this embodiment is described with reference to the data carrier interface of the electronic device 10 being adapted to memory card. The user may pick up a data carrier 30 having the outer proportions of a memory card, carrying the logo of a music band. Carrier 30 does not include the type of data IC memory normally included in a memory card, but consists basically of a plastic card carrying an NFC tag. When the carrier 30 is inserted in the slot 13 of an electronic device 10 incorporating a music player, data is acquired from the NFC tag. The acquired data represents a communication address to a Digital Management Rights (DRM) server 43, and control unit 18 sets up a communication link by means of signal transceiver 19 to server 43 through communications network 40. By accessing that DRM server 43, DRM rights for a lyric or album represented by the logo on the carrier 30 is downloaded to electronic device 10. Electronic device 10 is thereby given access to connect to a content server 44 over a communication link, to receive streaming data for presentation of the associated music through a speaker or headset (not shown) connected to the electronic device 10. Similar to the aforementioned embodiment, an advantage with this embodiment is the low cost of the carrier 30, combined with the usage of the familiar memory card interface.

Further examples of embodiments may include the use of data carrier 30 for achieving late binding of certain functionality in the electronic device, such as for activating an application, such as a game, already present by means of data code stored in a memory 20 of the electronic device. This way, electronic devices may be sold on the market without e.g. the latest media player implementation. Instead, the latest functionality for the media player will be available upon insertion of a virtual memory card holding an NFC tag. The data needed to modify or adapt the media player functionality may be contained on the microchip of the NFC tag, or it may be downloaded from a web link defined by an address acquired from the NFC tag. The virtual memory card may be distributed after the electronic device is sold, or along with the same. In either case, the electronic device itself need not be occupied by software booting in the late stage of production, which in turn speeds up the time before it hits the stores. Alternatively, the NFC tag may simply hold a passkey or similar, needed to process the data in memory 20 to be able to play the associated game. This provides a way of configuring electronic devices after they enter the market to a low price.

Yet another example of an embodiment of the invention is a data carrier which acts as an operator help card, which holds an URL in its NFC tag microchip. When the data carrier is inserted and the URL is read, connection to the link in question is achieved from the electronic device. There, the operator can present whatever information may be of interest, and an active chat line to a help desk could even be initiated.

The embodiments presented above mainly relate to the data carrier being a simple piece of plastic, preferably taking the shape of a memory card, carrying an NFC tag. A main advantage with such an embodiment is that the carrier itself resembles a well known type of high capacity data carrier, to an extremely low cost compared to standard data carriers of the type in question. The storage capability otherwise offered on a memory card is instead provided in a remote data memory in a communications network. Handling, however, will be transparent to the user, who will handle data accessing and storing as if the inserted data carrier were in fact a real memory card, hence the suggested term virtual memory card. However, in other embodiments data carrier 30 may still be a real data carrier for use with the data carrier interface, such as a real memory card, additionally being provided with an NFC tag. The data contained on the NFC tag may be used in combination with the content of the main memory of the memory card, e.g. by storing an authentication key which must be used in an authentication process with the electronic device before the main memory of the memory card can be accessed. Alternatively, the main memory of the memory card can store data related to a certain topic, whereas the attached NFC tag may contain a web link to a content server in a communications network where further information related to the topic can be found. Such an NFC tag can be attached to the memory card at a later stage, after the main memory of the memory card has been charged with data, without having to connect the memory card to a memory card reader/writer.

In another embodiment, data carrier 30 may include an interface 31 to the galvanic contacts 14 of the memory card interface in slot 13, even though the data carrier 30 is not a real memory card. In that interface, a simple circuit may e.g. be connected between two poles, which circuit has a certain impedance. The impedance may be static, i.e. purely resistive, or be capacitive or inductive. In an embodiment of an electronic device 10 for use with such a data carrier 30, data reader/writer unit 17 comprises a sensor configured to detect the impedance between the poles when connected to galvanic contacts 14. By analyzing the level of the impedance, the inserted data carrier 30 can thereby be identified as a virtual memory card, carrying an NFC tag. Upon such identification, the NFC interface is activated to collect data from the NFC tag.

The principles of the present invention have been described in the foregoing by examples of embodiments or modes of operations. However, the invention is not limited to the particular embodiments discussed above, which should be regarded as illustrative rather than restrictive, and it should be appreciated that variations may be made in those embodiments by persons skilled in the art, without departing from the scope of the present invention as defined by the appended claims.

## Claims

1. An electronic device (10), comprising:
- a Near Field Communication NFC interface, including an antenna (15) for sensing an electromagnetic wave, and a circuit (16) for acquiring data modulated in an electromagnetic wave;
- a data carrier interface, including a slot (13) for receiving a data carrier (30); wherein the antenna (15) is positioned adjacent to the data carrier slot (13), such that the NFC interface is operable to acquire data stored on an NFC tag positioned in the slot (13); **characterized in that** the electronic device (10) comprises:
- a control unit (18) connected to the NFC interface, operable to access a memory (42) based on the data acquired from the NFC tag.

2. The electronic device (10) of claim 1, wherein the antenna (15) and the data carrier slot (13) are parallel to each other, and at least partly overlap.

3. The electronic device (10) of claim 1, wherein the NFC interface comprises:
- an electromagnetic wave generator for forming a radio frequency field, connected to the antenna (15); and
- a demodulator connected to the antenna (15) for acquiring data modulated in an electromagnetic wave.

4. The electronic device (10) of claim 3, wherein the NFC interface comprises a modulator for sending data by modulating electromagnetic waves.

5. The electronic device (10) of claim 1, wherein the antenna (15) comprises a closed loop coil.

6. The electronic device (10) of claim 1, comprising:
- a signal transceiver connectable to a data memory (42) through a communications network (40); and wherein the control unit (18), connected to the NFC interface, is operable to send data to the data memory 42 responsive to a store command, by using a data memory access code acquired by the NFC interface.

7. The electronic device of claim 1, wherein the data stored on the NFC tag comprises a communication address of a network unit in a communications network (40), and the electronic device (10) further comprises:
- a signal transceiver (19) connectable to the communications network (40); and wherein the control unit (18), connected to the NFC interface, is operable to connect to the network unit by using the communication address acquired by the NFC interface.

8. The electronic device (10) of claim 1, wherein the control unit (18), connected to the NFC interface, configured to identify data acquired by the NFC interface as a communication address; further comprising:
- a signal transceiver configured to access the communication address through a communications network (40), responsive to the identification of the acquired data as an communication address.

9. The electronic device of claim 8, wherein the signal transceiver is configured to receive DRM rights for a data object, responsive to accessing the communication address.

10. The electronic device of claim 9, wherein the signal transceiver is configured to connect to a content server for receiving streaming data under approval defined by the received DRM rights.

11. The electronic device of claim 1, comprising:
- a radio signal transceiver connectable to communicate by radio with a radio communications network (40).

12. The electronic device of claim 1, wherein the control unit (18), connected to the NFC interface, is configured to identify data acquired by the NFC interface as a data access code; further comprising:
- a local memory (20) for storing data which is accessible by means of a data access code;
- a data access unit connected to the control unit (18), operable to access data in the local memory (20) by using the data access code.

13. The electronic device (10) of claim 1, wherein the NFC interface is configured to operate in the 13.56 MHz frequency band.

14. The electronic device (10) of claim 1, wherein the data carrier interface includes galvanic contacts (14) for communicative access to a memory on a data carrier.

15. The electronic device (10) of claim 1, wherein the data carrier interface is a memory stick interface and the data carrier slot (13) is a memory stick slot (13).

16. System for data communication comprising:
- an electronic device (10) according to claim 1;
- a support member (32);
- an NFC tag (30) attached to the support member (32);
wherein the antenna (15) is positioned adjacent to the data carrier slot (13), such that the NFC interface is operable to acquire data stored on the NFC tag (30) when the data carrier is positioned in the slot (13) **characterized in that** the control unit (18) is arranged to use the acquired data to access a memory.

17. The system of claim 16, wherein the support member has outer physical dimensions corresponding to the slot (13).

18. The system of claim 16, wherein the antenna (15) and the data carrier slot (13) are substantially parallel to each other, and at least partly overlap.

19. The system of claim 16, wherein the antenna (15) comprises a closed loop coil.

20. The system of claim 16, wherein the NFC tag comprises a microchip (34) connected to a tag antenna (16).

21. The system of claim 20, wherein the NFC interface comprises:
an electromagnetic wave generator for forming a radio frequency field, connected to the antenna (16);
a demodulator connected to the antenna (15) for acquiring data modulated in an
electromagnetic wave;
and wherein the microchip of the NFC tag is configured to be powered up by a short-range electromagnetic wave signal emitted through the antenna (15), and to respond by emitting an electromagnetic wave signal modulated to incorporate the data stored on the NFC tag.

22. The system of claim 16, wherein the data carrier interface includes galvanic contacts for communicative access to a memory on the data carrier.

23. The system of claim 22, wherein the data carrier interface includes
a sensor connected to the galvanic contacts;
wherein the data carrier includes
poles for connection to the galvanic contacts when the data carrier is inserted in the slot; and
a circuit connected to the poles;
and wherein the sensor is configured to identify an inserted data carrier as an NFC tag carrier by connection to the circuit.

24. The system of claim 23, wherein the sensor is configured to identify the inserted data carrier by means of detecting an impedance level between two poles.

25. The system of claim 16, wherein the NFC interface is configured to operate in the 13.56 MHz frequency band.

26. The system of claim 16, wherein the data carrier interface is a memory stick interface and the data carrier slot is (13) a memory stick slot.

27. Method for data communication in an electronic device (10), comprising the steps of:
- providing an electronic device (10) including a data carrier interface with a slot (13) for receiving a data carrier, and a Near Field Communication NFC interface with an antenna (15) for sensing an electromagnetic wave connected to a circuit (16) for acquiring data modulated in an electromagnetic wave, which antenna (15) is positioned adjacent to the data carrier slot (13);
- inserting a data carrier into the data carrier slot (13), which data carrier includes a support member having outer physical dimensions corresponding to the slot (13) and an NFC tag attached to the support member; and
- acquiring data stored on the NFC tag by means of the NFC interface;
**characterized in that** the method comprises the step of:
- accessing a memory by a control unit (18) of the electronic device (10) using the acquired data.

28. The method of claim 27, wherein the NFC interface operates in the 13.56 MHz frequency band.

29. The method of claim 27, wherein the data carrier interface includes galvanic contacts (14) for communicative access to a memory on a data carrier.

30. The method of claim 27, wherein the data carrier interface is a memory stick interface and the data carrier slot (13) is a memory stick slot.

31. The method of claim 27, wherein the antenna (15) and the data carrier slot (13) are parallel to each other, and at least partly overlap.

32. The method of claim 27, wherein the antenna (15) comprises a closed loop coil.

33. The method of claim 27, wherein the step of acquiring data comprises the steps of:
- generating an electromagnetic wave and emitting a short-range electromagnetic wave signal by means of the antenna (15);
- receiving the emitted signal in the NFC tag by means of a tag antenna (15) connected to microchip, wherein the circuit (16) is powered up and caused to
- emit an electromagnetic wave signal modulated to incorporate the data stored on the NFC tag; and
- demodulating the modulated signal in the NFC interface to retrieve the data.

34. A data carrier (30), comprising:
- a support structure (32) having outer dimensions shaped to fit in a slot (13) of a data carrier interface of an electronic device (10); and
- a Near Field Communication NFC tag attached to the support structure (32);
**characterized in that** the NFC tag comprises data arranged to be retrieved and used by a control unit (18) of an electronic device (10) to access a memory.

35. The data carrier of claim 34, wherein the support structure (32) has outer dimensions corresponding to an IC media carrier.

36. The data carrier of claim 34, wherein the support structure (32) has outer dimensions corresponding to Memory Stick media carrier.

37. The data carrier of claim 34, wherein the NFC tag comprises a microchip (34) connected to a radio frequency tag antenna (33).

## Patentansprüche

1. Elektronische Vorrichtung (10), umfassend:
- eine Nahfeldkommunikations- NFC Schnittstelle, umfassend eine Antenne (15) zum Erfassen einer elektromagnetischen Welle und eine Schaltung (16) zum Erlangen von Daten, die in einer elektromagnetischen Welle moduliert sind;
- eine Datenträgerschnittstelle, umfassend einen Schlitz (13) zum Empfangen eines Datenträgers (30); wobei die Antenne (15) neben dem Datenträgerschlitz (13) positioniert ist, so dass die NFC-Schnittstelle betreibbar ist, Daten zu erlangen, die auf einem NFC-Tag gespeichert sind, das in dem Schlitz (13) positioniert ist; **dadurch gekennzeichnet, dass** die elektronische Vorrichtung (10) umfasst:
- eine Steuerungseinheit (18), die mit der NFC-Schnittstelle verbunden ist, betreibbar auf einen Speicher (42) zuzugreifen, basierend auf den Daten, die von dem NFC-Tag erlangt werden.

2. Elektronische Vorrichtung (10) nach Anspruch 1, wobei die Antenne (15) und der Datenträgerschlitz (13) parallel zueinander sind und wenigstens teilweise überlappen.

3. Elektronische Vorrichtung (10) nach Anspruch 1, wobei die NFC-Schnittstelle umfasst:
- einen elektromagnetischen Wellenerzeuger zum Bilden eines Funkfrequenzfeldes, verbunden mit der Antenne (15); und
- einen Demodulator, der mit der Antenne (15) verbunden ist, um Daten zu erlangen, die in einer elektromagnetischen Welle moduliert sind.

4. Elektronische Vorrichtung (10) nach Anspruch 3, wobei die NFC-Schnittstelle einen Modulator zum Senden von Daten durch ein Modulieren von elektromagnetischen Wellen umfasst.

5. Elektronische Vorrichtung (10) nach Anspruch 1, wobei die Antenne (15) eine Spule mit geschlossener Schleife umfasst.

6. Elektronische Vorrichtung (10) nach Anspruch 1, umfassend:
- einen Signal-Sendeempfänger, der mit einem Datenspeicher (42) über ein Kommunikationsnetzwerk (40) verbunden werden kann; und wobei die Steuerungseinheit (18), die mit der NFC-Schnittstelle verbunden ist, betreibbar ist, Daten an den Datenspeicher (42) zu senden, ansprechend auf einen Speicherbefehl, durch Verwenden eines Datenspeicherzugriffscodes, der durch die NFC-Schnittstelle erlangt wird.

7. Elektronische Vorrichtung nach Anspruch 1, wobei die Daten, die auf dem NFC-Tag gespeichert sind, eine Kommunikationsadresse einer Netzwerkeinheit in einem Kommunikationsnetzwerk (40) umfassen, und die elektronische Vorrichtung (10) ferner umfasst:
- einen Signal-Sendeempfänger (19), der mit dem Kommunikationsnetzwerk (40) verbunden werden kann; und wobei die Steuerungseinheit (18), die mit der NFC-Schnittstelle verbunden ist, betreibbar ist, mit der Netzwerkeinheit verbunden zu werden, unter Verwendung der Kommunikationsadresse, die durch die NFC-Schnittstelle erlangt wird.

8. Elektronische Vorrichtung (10) nach Anspruch 1, wobei die Steuerungseinheit (18), die mit der NFC-Schnittstelle verbunden ist, konfiguriert ist, Daten zu identifizieren, die durch die NFC-Schnittstelle erlangt werden, als eine Kommunikationsadresse; ferner umfassend:
- einen Signal-Sendeempfänger, der konfiguriert ist, auf die Kommunikationsadresse durch ein Kommunikationsnetzwerk (40) zuzugreifen, in Ansprechen auf die Identifikation der erlangten Daten als eine Kommunikationsadresse.

9. Elektronische Vorrichtung nach Anspruch 8, wobei der Signal-Sendeempfänger konfiguriert ist, DRM-Rechte für ein Datenobjekt zu empfangen, in Ansprechen auf ein Zugreifen auf die Kommunikationsadresse.

10. Elektronische Vorrichtung nach Anspruch 9, wobei der Signal-Sendeempfänger konfiguriert ist, sich mit einem Inhalte-Server zu verbinden, um Streaming-Daten zu empfangen, mit einer Erlaubnis, die durch die empfangenen DRM-Rechte definiert ist.

11. Elektronische Vorrichtung nach Anspruch 1, umfassend:
- einen Funksignal-Sendeempfänger, der mit einem Funkkommunikationsnetzwerk (40) verbunden werden kann, um über Funk zu kommunizieren.

12. Elektronische Vorrichtung nach Anspruch 1, wobei die Steuerungseinheit (18), die mit der NFC-Schnittstelle verbunden ist, konfiguriert ist, Daten zu identifizieren, die durch die NFC-Schnittstelle erlangt werden, als einen Datenzugriffscode; ferner umfassend:
- einen lokalen Speicher (20) zum Speichern von Daten, auf die über einen Datenzugriffscode zugegriffen werden kann;
- eine Datenzugriffseinheit, die mit der Steuerungseinheit (18) verbunden ist, betreibbar auf Daten in dem lokalen Speicher (20) unter Verwendung des Datenzugriffscodes zuzugreifen.

13. Elektronische Vorrichtung (10) nach Anspruch 1, wobei die NFC-Schnittstelle konfiguriert ist, in dem 13,56 MHz Frequenzband betrieben zu werden.

14. Elektronische Vorrichtung (10) nach Anspruch 1, wobei die Datenträgerschnittstelle galvanische Kontakte (14) zum kommunikativen Zugriff auf einen Speicher auf einem Datenträger umfasst.

15. Elektronische Vorrichtung (10) nach Anspruch 1, wobei die Datenträgerschnittstelle eine Memory-Stick-Schnittstelle ist und der Datenträgerschlitz (13) ein Memory-Stick-Schlitz (13) ist.

16. System zur Datenkommunikation, umfassend:
- eine elektronische Vorrichtung (10) nach Anspruch 1;
- ein Unterstützungselement (32);
- ein NFC-Tag (13), das an das Unterstützungselement (32) angebracht ist;
wobei die Antenne (15) neben dem Datenträgerschlitz (13) positioniert ist , so dass die NFC-Schnittstelle betreibbar ist, Daten zur erlangen, die auf dem NFC-Tag (30) gespeichert sind, wenn der Datenträger in dem Schlitz (13) positioniert ist, **dadurch gekennzeichnet, dass** die Steuerungseinheit (18) eingerichtet ist, die erlangten Daten zu nutzen, um auf einen Speicher zuzugreifen.

17. System nach Anspruch 16, wobei das Unterstützungselement äußere physische Abmessungen hat, die dem Schlitz (13) entsprechen.

18. System nach Anspruch 16, wobei die Antenne (15) und der Datenträgerschlitz (13) im Wesentlichen parallel zueinander sind und wenigstens teilweise überlappen.

19. System nach Anspruch 16, wobei die Antenne (15) eine Spule mit geschlossener Schleife umfasst.

20. System nach Anspruch 16, wobei das NFC-Tag einen Mikrochip (34) umfasst, der mit einer Tag-Antenne (16) verbunden ist.

21. System nach Anspruch 20, wobei die NFC-Schnittstelle umfasst:
einen elektromagnetischen Wellenerzeuger zum Bilden eines Funkfrequenzfeldes, verbunden mit der Antenne (16);
einen Demodulator, verbunden mit der Antenne (15) zum Erlangen von Daten, die in einer elektromagnetischen Welle moduliert sind;
und wobei der Mikrochip des NFC-Tags konfiguriert ist, durch ein elektromagnetisches Wellensignal mit kurzer Reichweite mit Leistung versorgt zu werden, das von der Antenne (15) ausgegeben wird, und durch ein Ausgeben eines elektromagnetischen Wellensignals zu antworten, das moduliert ist, die Daten, die auf dem NFC-Tag gespeichert sind, zu beinhalten.

22. System nach Anspruch 16, wobei die Datenträgerschnittstelle galvanische Kontakte umfasst, zum kommunikativen Zugriff auf einen Speicher auf dem Datenträger.

23. System nach Anspruch 22, wobei die Datenträgerschnittstelle einen Sensor umfasst, der mit den galvanischen Kontakten verbunden ist;
wobei der Datenträger umfasst:
Pole zur Verbindung mit den galvanischen Kontakten, wenn der Datenträger in den Schlitz eingeführt ist; und
eine Schaltung, die mit den Polen verbunden ist;
und wobei der Sensor konfiguriert ist, einen eingeführten Datenträger durch ein Verbinden mit der Schaltung als einen NFC-Tag-Träger zu identifizieren.

24. System nach Anspruch 23, wobei der Sensor konfiguriert ist, den eingeführten Datenträger durch ein Erfassen eines Impedanzpegels zwischen zwei Polen zu identifizieren.

25. System nach Anspruch 16, wobei die NFC-Schnittstelle konfiguriert ist, im 13,56 MHz Frequenzband betrieben zu werden.

26. System nach Anspruch 16, wobei die Datenträgerschnittstelle eine Memory-Stick-Schnittstelle ist und der Datenträgerschlitz ein Memory-Stick-Schlitz ist.

27. Verfahren zur Datenkommunikation in einer elektronischen Vorrichtung (10), umfassend die Schritte:
- ein Bereitstellen einer elektronischen Vorrichtung (10) umfassend eine Datenträgerschnittstelle mit einem Schlitz (13) zum Aufnehmen eines Datenträgers und eine Nahfeldkommunikations- NFC Schnittstelle mit einer Antenne (15) zum Erfassen einer elektromagnetischen Welle, verbunden mit einer Schaltung (16) zum Erlangen von Daten, die in einer elektromagnetischen Welle moduliert sind, welcher Antenne (15) neben dem Datenträgerschlitz (13) positioniert ist;
- ein Einführen eines Datenträgers in den Datenträgerschlitz (13), welcher Datenträger ein Unterstützungselement mit äußeren physischen Abmessungen umfasst, die dem Schlitz (13) entsprechen und ein NFC-Tag, das an das Unterstützungselement angebracht ist, und
- ein Erlangen von Daten, die auf dem NFC-Tag gespeichert sind, über die NFC-Schnittstelle;
**dadurch gekennzeichnet, dass** das Verfahren den Schritt umfasst:
- ein Zugreifen auf einen Speicher durch eine Steuerungseinheit (18) der elektronischen Vorrichtung (10) unter Verwendung der erlangten Daten.

28. Verfahren nach Anspruch 27, wobei die NFC-Schnittstelle in den 13,56 MHz Frequenzband betrieben wird.

29. Verfahren nach Anspruch 27, wobei die Datenträgerschnittstelle galvanische Kontakte (14) zum kommunikativen Zugriff auf einen Speicher auf einem Datenträger umfasst.

30. Verfahren nach Anspruch 27, wobei die Datenträgerschnittstelle eine Memory-Stick-Schnittstelle und der Datenträgerschlitz (13) ein Memory-Stick-Schlitz ist.

31. Verfahren nach Anspruch 27, wobei die Antenne (15) und der Datenträgerschlitz (13) parallel zueinander sind und wenigstens teilweise überlappen.

32. Verfahren nach Anspruch 27, wobei die Antenne (15) eine Spule mit geschlossener Schleife umfasst.

33. Verfahren nach Anspruch 27, wobei der Schritt zum Erlangen von Daten die Schritte umfasst:
- ein Erzeugen einer elektromagnetischen Welle und ausgeben eines elektromagnetischen Wellensignals mit einer kurzen Reichweite durch die Antenne (15);
- ein Empfangen des ausgegebenen Signals in dem NFC-Tag durch eine Tag-Antenne (15), verbunden mit einem Mikrochip, wobei die Schaltung (16) mit Leistung versorgt wird und dazu gebracht wird
- ein elektromagnetisches Wellensignal auszugeben, das moduliert ist, die Daten zu beinhalten, die auf dem NFC-Tag gespeichert sind; und
- ein Demodulieren des modulierten Signals in der NFC-Schnittstelle, um die Daten abzurufen.

34. Datenträger (30), umfassend:
- eine Unterstützungsstruktur (32) mit äußeren Abmessungen, die geformt sind in einen Schlitz (13) einer Datenträgerschnittstelle einer elektronischen Vorrichtung (10) zu passen; und
- ein Nahfeldkommunikations- NFC Tag, das mit der Unterstützungsstruktur (32) verbunden ist;
**dadurch gekennzeichnet, dass** das NFC-Tag Daten umfasst, die eingerichtet sind, abgerufen zu werden und verwendet zu werden durch eine Steuerungseinheit (18) einer elektronischen Vorrichtung (10), um auf einen Speicher zuzugreifen.

35. Datenträger nach Anspruch 34, wobei die Unterstützungsstruktur (32) äußere Abmessungen hat, die einem IC-Medienträger entsprechen.

36. Datenträger nach Anspruch 34, wobei die Unterstützungsstruktur (32) äußere Abmessungen hat, die einem Memory-Stick-Medienträger entsprechen.

37. Datenträger nach Anspruch 34, wobei das NFC-Tag einen Mikrochip (34) umfasst, der mit einer Funkfrequenz-Tag-Antenne (33) verbunden ist.

## Revendications

1. Dispositif électronique (10), comprenant :
- une interface de communication en champ proche, NFC, comprenant une antenne (15) pour détecter une onde électromagnétique, et un circuit (16) pour acquérir des données modulées en une onde électromagnétique ;
- une interface de support de données, comprenant une fente (13) pour recevoir un support de données (30) ; dans lequel l'antenne (15) est positionnée de manière adjacente à la fente de support de données (13), de sorte que l'interface NFC permette d'acquérir des données stockées sur une étiquette NFC positionnée dans la fente (13) ; **caractérisé en ce que** le dispositif électronique (10) comprend :
- une unité de commande (18) connectée à l'interface NFC, permettant d'accéder à une mémoire (42) sur la base des données acquises par l'étiquette NFC.

2. Dispositif électronique (10) de la revendication 1, dans lequel l'antenne (15) et la fente de support de données (13) sont parallèles l'une à l'autre, et se chevauchent au moins partiellement.

3. Dispositif électronique (10) de la revendication 1, dans lequel l'interface NFC comprend :
- un générateur d'ondes électromagnétiques pour former un champ de radiofréquence, connecté à l'antenne (15) ; et
- un démodulateur connecté à l'antenne (15) pour acquérir des données modulées en une onde électromagnétique.

4. Dispositif électronique (10) de la revendication 3, dans lequel l'interface NFC comprend un modulateur pour envoyer des données en modulant des ondes électromagnétiques.

5. Dispositif électronique (10) de la revendication 1, dans lequel l'antenne (15) comprend une bobine en boucle fermée.

6. Dispositif électronique (10) de la revendication 1, comprenant :
- un émetteur-récepteur de signaux pouvant être connecté à une mémoire de données (42) à travers un réseau de communications (40) ; et dans lequel l'unité de commande (18), connectée à l'interface NFC, permet d'envoyer des données à la mémoire de données 42 en réponse à une commande de stockage, en utilisant un code d'accès à la mémoire de données acquis par l'interface NFC.

7. Dispositif électronique de la revendication 1, dans lequel les données stockées sur l'étiquette NFC comprennent une adresse de communication d'une unité de réseau dans un réseau de communications (40), et le dispositif électronique (10) comprend en outré :
- un émetteur-récepteur de signaux (19) pouvant être connecté au réseau de communications (40) ; et dans lequel l'unité de commande (18), connectée à l'interface NFC, permet de se connecter à l'unité de réseau en utilisant l'adresse de communication acquise par l'interface NFC.

8. Dispositif électronique (10) de la revendication 1, dans lequel l'unité de commande (18), connectée à l'interface NFC, est configurée pour identifier des données acquises par l'interface NFC comme adresse de communication ; comprenant en outre :
- un émetteur-récepteur de signaux, configuré pour accéder à l'adresse de communication à travers un réseau de communications (40), réagissant à l'identification des données acquises comme adresse de communication.

9. Dispositif électronique de la revendication 8, dans lequel l'émetteur-récepteur de signaux est configuré pour recevoir des droits DRM pour un objet de données, en réponse à l'accès à l'adresse de communication.

10. Dispositif électronique de la revendication 9, dans lequel l'émetteur-récepteur de signaux est configuré pour se connecter à un serveur de contenu afin de recevoir des données de transmission en continu sous l'approbation définie par les droits DRM reçus.

11. Dispositif électronique de la revendication 1, comprenant :
- un émetteur-récepteur de signaux radio pouvant être connecté pour communiquer par radio avec un réseau de communications radio (40).

12. Dispositif électronique de la revendication 1, dans lequel l'unité de commande (18), connectée à l'interface NFC, est configurée pour identifier des données acquises par l'interface NFC comme code d'accès aux données ; comprenant en outre :
- une mémoire locale (20) pour stocker des données qui sont accessibles au moyen d'un code d'accès aux données ;
- une unité d'accès aux données connectée à l'unité de commande (18), permettant d'accéder aux données dans la mémoire locale (20) en utilisant le code d'accès aux données.

13. Dispositif électronique (10) de la revendication 1, dans lequel l'interface NFC est configurée pour opérer dans la bande fréquence de 13,56 MHz.

14. Dispositif électronique (10) de la revendication 1, dans lequel l'interface de support de données comprend des contacts galvaniques (14) pour un accès de communication à une mémoire sur un support de données.

15. Dispositif électronique (10) de la revendication 1, dans lequel l'interface de support de données est une interface de carte mémoire flash et la fente du support de données (13) est une fente de carte mémoire flash (13).

16. Système pour la communication de données comprenant :
- un dispositif électronique (10) selon la revendication 1 ;
- un élément de support (32) ;
- une étiquette NFC (30) fixée à l'élément de support (32) ;
dans lequel l'antenne (15) est positionnée de manière adjacente à la fente de support de données (13), de sorte que l'interface NFC permette d'acquérir des données stockées sur l'étiquette NFC (30) lorsque le support de données est positionné dans la fente (13), **caractérisé en ce que** l'unité de commande (18) est agencée pour utiliser les données acquises pour accéder à une mémoire.

17. Système de la revendication 16, dans lequel l'élément de support a des dimensions physiques externes qui correspondent à la fente (13).

18. Système de la revendication 16, dans lequel l'antenne (15) et la fente de support de données (13) sont essentiellement parallèles l'une à l'autre, et se chevauchent au moins partiellement.

19. Système de la revendication 16, dans lequel l'antenne (15) comprend une bobine en boucle fermée.

20. Système de la revendication 16, dans lequel l'étiquette NFC comprend une micro-puce (34) connectée à une antenne d'étiquette (16).

21. Système de la revendication 20, dans lequel l'interface NFC comprend :
un générateur d'ondes électromagnétiques pour former un champ de radiofréquence connecté à l'antenne (16) ;
un démodulateur connecté à l'antenne (15) pour acquérir des données modulées en une onde électromagnétique ;
et dans lequel la micro-puce de l'étiquette NFC est configurée pour être mise sous tension par un signal d'onde électromagnétique de courte portée émis par l'antenne (15), et à réagir en émettant un signal d'onde électromagnétique modulé pour incorporer les données stockées sur l'étiquette NFC.

22. Système de la revendication 16, dans lequel l'interface de support de données comprend des contacts galvaniques pour un accès de communication à une mémoire sur le support de données.

23. Système de la revendication 22, dans lequel l'interface de support de données comprend un capteur connecté aux contacts galvaniques ;
dans lequel le support de données comprend
des pôles pour la connexion aux contacts galvaniques lorsque le support de données est inséré dans la fente ; et
un circuit connecté aux pôles ;
et dans lequel le capteur est configuré pour identifier un support de données inséré comme support d'étiquette NFC par une connexion au circuit.

24. Système de la revendication 23, dans lequel le capteur est configuré pour identifier le support de données inséré par le moyen de la détection d'un niveau d'impédance entre les deux pôles.

25. Système de la revendication 16, dans lequel l'interface NFC est configurée pour opérer dans la bande de fréquence de 13,56 MHz.

26. Système de la revendication 16, dans lequel l'interface de support de données est une interface de carte mémoire flash et la fente de support de données (13) est une fente de carte mémoire flash.

27. Procédé pour la communication de données dans un dispositif électronique (10), comprenant les étapes consistant :
- à fournir un dispositif électronique (10) comprenant une interface de support de données avec une fente (13) pour recevoir un support de données, et une interface de communication en champ proche, NFC, avec une antenne (15) pour détecter une onde électromagnétique connectée à un circuit (16) afin d'acquérir des données modulées en une onde électromagnétique, laquelle antenne (15) est positionnée de manière adjacente à la fente de support de données (13) ;
- à insérer un support de données dans la fente de support de données (13), lequel support de données comprend un élément de support ayant des dimensions physiques externes qui correspondent à la fente (13) et une étiquette NFC fixée à l'élément de support ; et
- à acquérir des données stockées sur l'étiquette NFC au moyen de l'interface NFC ;
**caractérisé en ce que** le procédé comprend l'étape consistant :
- à accéder à une mémoire par une unité de commande (18) du dispositif électronique (10) en utilisant les données acquises.

28. Procédé de la revendication 27, dans lequel l'interface NFC opère dans la bande de fréquence de 13,56 MHz.

29. Procédé de la revendication 27, dans lequel l'interface de support de données comprend des contacts galvaniques (14) pour un accès de communication à une mémoire sur un support de données.

30. Procédé de la revendication 27, dans lequel l'interface de support de données est une interface de carte mémoire flash et la fente de support de données (13) est une fente de carte mémoire flash.

31. Procédé de la revendication 27, dans lequel l'antenne (15) et la fente de support de données (13) sont parallèles l'une à l'autre, et se chevauchent au moins partiellement.

32. Procédé de la revendication 27, dans lequel l'antenne (15) comprend une bobine en boucle fermée.

33. Procédé de la revendication 27, dans lequel l'étape consistant à acquérir des données comprend les étapes consistant :
- à générer une onde électromagnétique et à émettre un signal d'onde électromagnétique de courte portée au moyen de l'antenne (15) ;
- à recevoir le signal émis dans l'étiquette NFC au moyen d'une antenne d'étiquette (15) connectée à la micro-puce, où le circuit (16) est mis sous tension et est amené à émettre un signal d'onde électromagnétique modulé pour incorporer les données stockées sur l'étiquette NFC ; et
- à démoduler le signal modulé dans l'interface NFC pour récupérer les données.

34. Support de données (30), comprenant :
- une structure de support (32) ayant des dimensions externes dont la forme est adaptée à une fente (13) d'une interface de support de données d'un dispositif électronique (10) ; et
- une étiquette de communication en champ proche, NFC fixée à la structure de support (32) ;
**caractérisé en ce que** l'étiquette NFC comprend des données agencées pour être récupérées et utilisées par une unité de commande (18) d'un dispositif électronique (10) pour accéder à une mémoire.

35. Support de données de la revendication 34, dans lequel la structure de support (32) a des dimensions externes qui correspondent à un support multimédia à circuit intégré.

36. Support de données de la revendication 34, dans lequel la structure de support (32) a des dimensions externes qui correspondent à un support multimédia à carte mémoire flash.

37. Support de données de la revendication 34, dans lequel l'étiquette NFC comprend une micro-puce (34) reliée à une antenne d'étiquette radiofréquence (33).
